# EUROPÄISCHE PATENTANMELDUNG

(11) **EP 0 753 378 A1**
(43) Veröffentlichungstag der Anmeldung: **15.01.1997**
(21) Anmeldenummer: 96111377.6
(22) Anmeldetag: 15.07.1996
(51) Int. Cl.: B23Q 1/00, B23Q 7/04, B27F 1/02

(54) **Vorrichtung zum Transportieren, Positionieren und/oder Verschwenken eines Rahmens sowie Verfahren hierzu**

(30) Priorität: 13.07.1995 DE 19525279
(71) Anmelder: ROTOX GmbH B. EISENBACH, D-65611 Brechen (DE)
(72) Erfinder: Eisenbach, Bernd, D-65611 Brechen (DE)
(74) Vertreter: Müller, Eckhard, Dr.

(57) **Zusammenfassung**

Es wird eine Vorrichtung (28) zum Transportieren, Positionieren und/oder Verschwenken eines Werkstückes, insbesondere eines Fenster- oder Türrahmens (24) in wenigstens eine Bearbeitungsposition an einer Bearbeitungsstation (26) beschrieben. Die Vorrichtung (28) weist ein in Richtung einer Längsachse (30) der Vorrichtung (28) verfahrbares Spannmittel (22) auf. Das Spannmittel (22) besitzt zwei insbesondere i. w. rechtwinklig zueinander ausgerichtete Spanneinrichtungen (32, 34) zum Einspannen von insbesondere i. w. rechtwinklig angeordneten Rahmenteilen des Rahmens (24), wie Rahmenschenkel (6, 7), Kämpfer (19), Rahmenkreuz (17) o. dgl. Das Spannmittel (22) ist in Richtung einer zu einer Auflage (36) der Vorrichtung (28) i. w. senkrechten Achse (38) auf- und abverfahrbar sowie um die Achse (38) um einen Winkel (40) verschwenkbar.

## Beschreibung

Die Erfindung betrifft eine Vorrichtung zum Transportieren, Positionieren und/oder Verschwenken eines Rahmens, insbesondere Fenster- oder Türrahmen o. dgl., in wenigstens eine Bearbeitungsposition an einer Bearbeitungsstation.

Derartige Vorrichtungen werden insbesondere eingesetzt, um einen Fenster- oder Türrahmen an den Rahmenaußen- und -innenschenkeln bzw. -ecken mittels einer Bearbeitungsstation oder -stationen zu bearbeiten, bspw. um Schweißraupen abzutragen oder Dichtungsnuten o. dgl. einzubringen. Bei diesen bekannten Vorrichtungen erfolgt das Transportieren und Einspannen des Rahmens in der Bearbeitungsposition an der Maschine mittels separater Einrichtungen. Zunächst wird der Rahmen zur Bearbeitungsmaschine transportiert und dort mittels einer separaten Einrichtung zentriert, eingespannt und zur Bearbeitung der Rahmenecken bzw. von Kämpferverbindungen oder Rahmenkreuzen o. dgl. entsprechend gewendet.

Nachteilig hierbei ist der große konstruktive Aufwand sowie das Problem des Positionierens des Rahmens innerhalb der Vorrichtung unter Berücksichtigung der erforderlichen Bewegungsfreiheit der Bearbeitungswerkzeuge der Bearbeitungsstationen.

Demgegenüber liegt der Erfindung die Aufgabe zugrunde, eine Vorrichtung der eingangs genannten Art dahingehend weiterzubilden, daß eine konstruktiv einfache Vorrichtung geschaffen wird, bei der darüber hinaus genügend Bewegungsfreiheit für die Bearbeitungswerkzeuge der Bearbeitungsstation vorhanden ist.

Diese Aufgabe wird nach der Erfindung bei der Vorrichtung mit den eingangs genannten Merkmalen i. w. dadurch gelöst, daß ein in Richtung einer Längsachse der Vorrichtung verfahrbares Spannmittel vorgesehen ist, das zwei, insbesondere i. w. rechtwinklig zueinander ausgerichtete Spanneinrichtungen zum Einspannen von insbesondere i. w. rechtwinklig angeordneten Rahmenteilen des Rahmens, wie Rahmenschenkel, Kämpfer, Rahmenkreuz o. dgl., aufweist und um eine zur Transportrichtung senkrechte Achse um einen Winkel verschwenkbar ist.

Hierdurch wird eine konstruktiv einfache Vorrichtung geschaffen, mit der der Rahmen beim Einspannen selbsttätig positioniert und dann zu der Bearbeitungsstation zur Bearbeitung verfahren wird. Aufgrund der Schwenkbarkeit des Spannmittels besteht zusätzlich die Möglichkeit, den Rahmen zu verschwenken, so daß mittels der Bearbeitungsstation nacheinander sämtliche Rahmenschenkel, insbesondere auf der Rahmeninnenseite wie auch auf der -außenseite abgearbeitet werden können. Die Bearbeitungsstation selbst weist somit keine Spann- oder dgl. Einrichtungen mehr auf, so daß für eine ausreichende Bewegungsfreiheit der Bearbeitungswerkzeuge gesorgt ist.

Nach einer ersten besonderen Ausführungsform der Erfindung ist es vorgesehen, daß das Spannmittel bzw. die Spanneinrichtungen in Richtung einer zu einer Auflage der Vorrichtung im wesentlichen senkrechten Achse auf- und abverfahrbar ist bzw. sind. Hierdurch taucht das Spannmittel in das Profil ein, um insbesondere geschlossene Rahmen handhaben zu können. Ein weiterer Vorteil ist, daß durch Anheben des Rahmens eventuell vorstehende Schweißraupen an den zusammengeschweißten Kunststoffprofilstücken keine Behinderung beim Transport des Werkstückes darstellen.

Dabei hat es sich gemäß einer vorteilhaften Ausgestaltung der Erfindung als vorteilhaft erwiesen, daß das Spannmittel um Winkel von etwa 45° bis 180°, bevorzugt um, mittels einer Rasteinrichtung einstellbare Winkelschritte von ca. 45° oder ein Vielfaches hiervon verschwenkbar ist. Hierdurch ist die Möglichkeit gegeben, Rahmenaußenecken, Rahmeninnenecken, Rahmenkreuze, Kämpferverbindungen o. dgl. sukzessive nacheinander zu bearbeiten, wobei der Rahmen insbesondere vollautomatisch von der Vorrichtung verfahren bzw. verschwenkt wird. Es versteht sich, daß die angegebenen Winkelschritte auf herkömmliche Rahmen mit rechtwinkliger Rahmenkonstruktion abgestellt sind. Für Sonderausfertigungen, bei denen der Rahmen von der rechtwinkligen Struktur abweicht, sind natürlich entsprechend angepaßte Schwenkwinkel bzw. Winkelschritte einstellbar. Selbstverständlich ist es auch möglich, daß die beiden Spanneinrichtungen gegeneinander verschwenkbar sind, um auch Rahmen mit spitz- oder stumpfwinklig aufeinander zulaufenden Rahmenschenkeln handhaben zu können.

Die Spannvorrichtung ist nach einer anderen vorteilhaften Ausführungsform der Erfindung als Spannzange mit einem vorzugsweise feststehendem Anschlag und einem auf den Anschlag zu und von dem Anschlag weg verfahrbaren Spannteil, insbesondere Spannbacken, ausgebildet. Die feststehenden Anschläge dienen zur Zentrierung des Rahmens sowie als Widerlager für die verfahrbaren Spannteile, so daß die Rahmenteile zwischen den Anschlägen und den Spannteilen sicher zentrierbar und einspannbar sind.

Das Verfahren der Spannteile der Spannzange und/oder der Anschläge in und außer Anlagestellung an das Werkstück bzw. die Rahmenschenkel kann auch durch eine Schwenkbewegung der Spannteile und/oder Anschläge erfolgen. Beispielsweise können die Spannteile bzw. die Anschläge um etwa 90° in und außer Anlagestellung geschwenkt oder weggeklappt werden. Ggf. kann durch diese Maßnahme auf eine Absenkbewegung der Spannmittel verzichtet werden.

Dabei hat es sich nach einer weiteren, besonders vorteilhaften Ausführungsform der Erfindung als vorteilhaft erwiesen, die ggf. verfahrbaren Spannteile als Rollen, insbesondere Andruckrollen o. dgl. auszubilden. Diese Rollen haben zum einen den Vorteil, daß Impressionen an den Rahmenteilen infolge des Einspannens weitestgehend vermieden werden. Darüber hinaus wird mit dem Einsatz von derartigen Rollen ein im Falle von Spannbacken auftretendes Problem beim Zentrieren des Rahmens vermieden, welches bei nicht simultanen Spannbewegungen der beiden Spannvorrichtungen auftritt. Ist nämlich mittels der einen Spannvorrichtung bereits ein Rahmenteil eingespannt, ohne daß die andere Spannvorrichtung bereits in Anlagestellung an das weitere Rahmenteil getreten ist, kann es vorkommen, daß der Rahmen sich noch nicht in der Zentrierstellung befindet. Bei dem Einsatz herkömmlicher Spannteile kann dann die Situation auftreten, daß das zuletzt in Anlagestellung mit dem Rahmenteil tretende Spannteil nicht mehr in der Lage ist, das entsprechende Rahmenteil gegen den Anschlag in Anlagestellung zu bringen, da der Rahmen bereits durch die erste Spanneinrichtung fest eingespannt ist. Durch den Einsatz von Rollen als Spannteil kann aber der zuerst erfaßte Rahmenteil selbst bei gespannter erster Spanneinrichtung aufgrund der Einwirkung der zweiten Spanneinrichtung dennoch in die zentrierte Stellung verschoben werden.

Es hat sich nach einer anderen Ausführungsform der Erfindung als vorteilhaft erwiesen, daß das Spannmittel einen Tragarm aufweist, der einends über ein Führungselement an einem in Förderrichtung verlaufenden Balken o. dgl., bspw. mittels eines Zahnriemenantriebs verfahrbar gelagert ist.

Von Vorteil ist Tragarm mittels einer Hubvorrichtung bzgl. des Führungselements in Richtung der Schwenkachse auf- und abverfahrbar, so daß ein einfaches Absenken und Anheben des Spannmittels ermöglicht ist.

Nach einer anderen, konstruktiv besonders vorteilhaften Ausgestaltung der Erfindung weist der Tragarm eine Halteplatte auf, an der die Spannvorrichtungen und deren Betätigungsmittel, wie Spannzylinder o. dgl., angeordnet sind, wobei die Halteplatte verschwenkbar an dem Tragarm gelagert ist.

Das Verschwenkmittel für die Halteplatte ist als Schwenkzylinder mit zugeordneter Kolbenstange ausgebildet, die einends an der Halteplatte, insbesondere einem Auge der Halteplatte, und anderenends an dem Tragarm angelenkt ist.

Von Vorteil ist nach einer anderen Ausführungsform der Erfindung entlang der Längsachse bzw. Förderrichtung der Vorrichtung ein zweites Spannmittel verfahrbar angeordnet, welches eine Spanneinrichtung zum Einspannen eines Rahmenteils des Rahmens aufweist. Durch diese Maßnahme kann die Taktzeit zur Bearbeitung des Rahmens reduziert werden, indem nach der Bearbeitung eines Rahmenecks o. dgl. das erste Spannmittel geöffnet und angehoben wird, während das zweite Spannmittel in Eingriff bzw. Anlagestellung mit dem Rahmenteil verbleibt und den Rahmen nach Öffnen unter Anheben des ersten Spannmittels in die nächste Bearbeitungsposition bzgl. der Bearbeitungsstation verfährt.

Von Vorteil ist das zweite Spannmittel insbesondere mittels eines zweiten Zahnriementriebes o. dgl. unabhängig von dem ersten Spannmittel verfahrbar.

Die Halteplatte ist von Vorteil i. w. als Winkelplatte o. dgl. ausgebildet, die insbesondere im Bereich des Scheitels eine Aussparung aufweist, an deren Seitenrändern die Spannvorrichtungen angeordnet sind. Die Aussparung ist dabei derart positioniert, daß im Bereich der Aussparung das zu bearbeitende Rahmenteil der Innenseite wie auch der Außenseite völlig frei zugänglich ist, so daß die Bearbeitungswerkzeuge der Bearbeitungsstation ohne weiteres allseitig an das zu bearbeitende Rahmenteil heranführbar sind.

Nach einer besonderen Ausgestaltung der Erfindung ist es vorgesehen, daß das Spannmittel bzw. deren Halteplatte mittels einer Rasteinrichtung, bspw. wenigstens einem in eine Bohrung an der Halteplatte eingreifenden Rastbolzen, in der Bearbeitungsposition an der Bearbeitungsstation positionierbar ist bzw. sind. Hierdurch werden die Rahmen exakt in die Bearbeitungsposition gebracht und in dieser Position gehalten. Einem Ausschuß infolge von nicht exakter Positionierung der Rahmen in der Bearbeitungsstation ist dadurch vorgebeugt. Bevorzugt sind zwei Rastbolzen vorgesehen, wovon der eine in der Schwenkachse des Spannmittels bzw. der Spannzange liegt und als Zentrierbolzen dient, während der zweite Rastbolzen eine Drehsicherung der Spannzange bewirkt.

Die Erfindung betrifft auch ein Verfahren für eine erfindungsgemäße Vorrichtung, welches sich dadurch auszeichnet, daß man die Spannmittel hin zum Rahmen verfährt und den Rahmen einspannt, den Rahmen zur Bearbeitungsstation verfährt und bearbeitet, mit den Spannmitteln ggf. den Rahmen erneut einspannt, verfährt und bearbeitet, die Spannmittel um etwa 45° oder ein Vielfaches verschwenkt und den Rahmen einspannt, verfährt und bearbeitet, den eingespannten Rahmen mit dem Spannmittel um etwa 45° oder ein Vielfaches verschwenkt und bearbeitet, ggf. einen oder mehrere der vorhergehenden Schritte wiederholt und den Rahmen weg von der Bearbeitungsstation verfährt und die Spannmittel löst.

In einer Ausgestaltung des erfindungsgemäßen Verfahrens verfährt man den Rahmen mittels zweiter Spannmittel, sofern die ersten Spannmittel außer Eingriff mit dem Rahmen stehen.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform eines erfindungsgemäßen Spannmittels in perspektivischer Darstellung,
- Figur 2: einen Querschnitt durch das Spannmittel der Figur 1,
- Figur 3: in schematischer Darstellung eine Draufsicht auf ein Spannmittel mit eingespanntem Rahmenteil,
- Figur 4: in schematischer Darstellung ein Spannmittel mit einer Rasteinrichtung in einer Draufsicht,
- Figur 5a bis g: in schematischer Darstellung den Funktionsablauf einer erfindungsgemäßen Vorrichtung,
- Figur 6: in perspektivischer Darstellung ein mit mehreren Rollen versehenes Spannteil,
- Figur 6a: eine Seitenansicht der Figur 6 mit im Querschnitt modifizierten Rahmenteil,
- Figur 7a bis d: verschiedene Positionierungen des Spannmittels für unterschiedliche Rahmenverbindungen, wie eine Eckverbindung, eine Kämpferverbindung, eine zweite Eckverbindung des Rahmens sowie eine Kreuzverbindung und
- Figur 8: eine weitere Ausführungsform der erfindungsgemäßen Vorrichtung mit einem zusätzlichen zweiten Spannmittel.

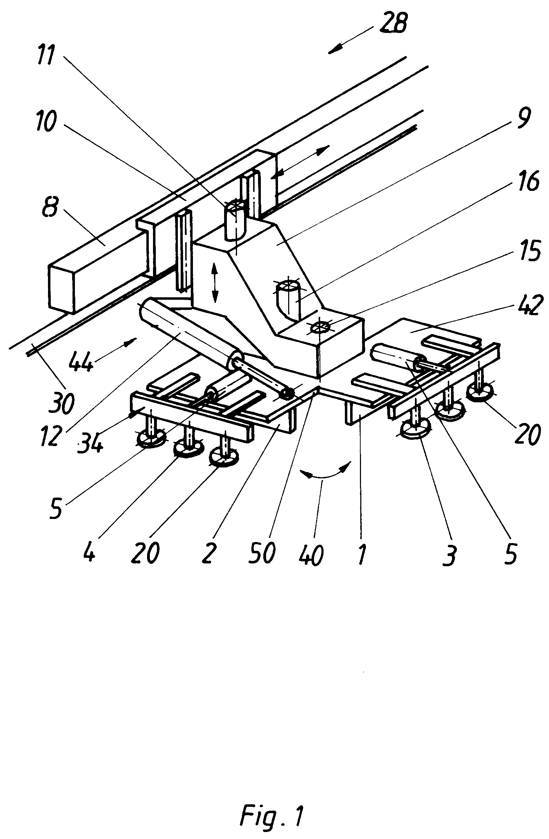

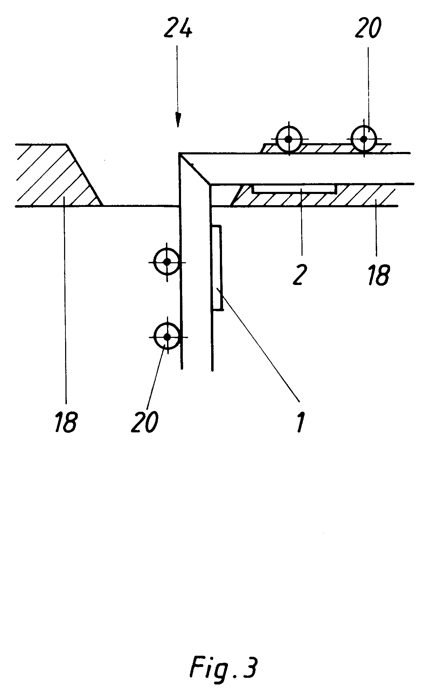

Wie insbesondere aus den Figuren 1 bis 3 ersichtlich ist, weist die Vorrichtung 28 zum Einspannen und Zentrieren eines Rahmens 24, insbesondere eines Fenster- oder Türrahmens o. dgl., und zum Verfahren bzw. Verschwenken des Rahmens 24 in eine oder mehrere Bearbeitungspositionen an einer Bearbeitungsstation 26 ein in Richtung einer Längsachse 30 bzw. in Förderrichtung der Vorrichtung 28 verfahrbares Spannmittel 22 auf. Das Spannmittel 22 besitzt zwei insbesondere i. w. rechtwinklig zueinander ausgerichtete Spanneinrichtungen 32, 34 zum Einspannen von insbesondere i. w. rechtwinklig angeordneten Rahmenteilen des Rahmens 24, wie Rahmenschenkel 6, 7, Kämpfer 19, Rahmenkreuz 17 o. dgl. Das Spannmittel 22 ist in Richtung einer zu einer Auflage 36 der Vorrichtung 28 i. w. senkrechten Achse 38 aufund abverfahrbar sowie um die Schwenkachse 38 um einen Winkel 40 verschwenkter. Die Spanneinrichtungen 32, 34 weisen jeweils ein an der Innenseite der beiden Profilschenkel 6, 7 des Rahmenecks zu liegen kommenden feststehenden Anschlag 1, 2 auf. Auf der gegenüberliegenden Seite, also auf der Rahmenaußenseite sind auf den Anschlag 1, 2 zu und von dem Anschlag 1, 2 weg verfahrbare Spannteile, insbesondere Spannbacken 3 und 4 angeordnet.

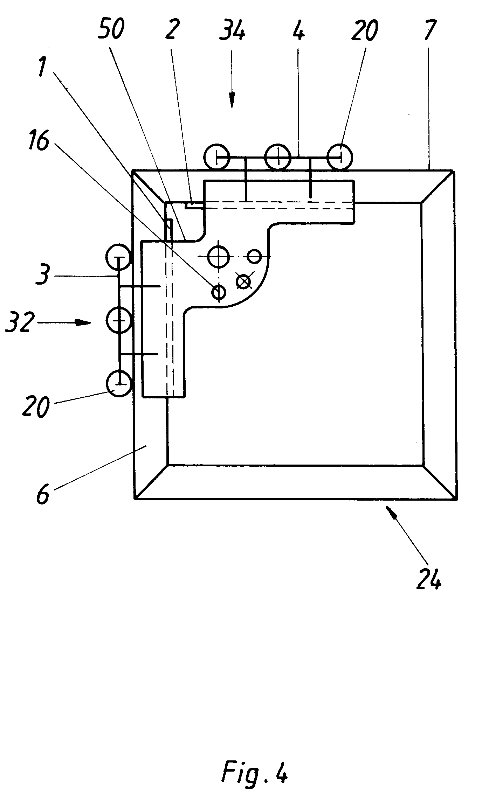

Das Spannmittel 22 ist um Winkel 40 von etwa 45° bis 180°, bevorzugt um mittels einer Rasteinrichtung 16 einstellbare Winkelschritte von ca. 45° oder ein Vielfaches hiervon, bspw. etwa 90°, verschwenkbar. Hierfür ist an einer Montageplatte eines Tragarms 9 für die Spannmittel 22 angelenkter Schwenkzylinder 12 vorgesehen, welcher mit der zugehörigen Kolbenstange 13 an einem Auge 14 o. dgl. des Spannmittels 22 angreift. Durch Ein- und Ausfahren der Kolbenstange 13 erfolgt dann ein Verschwenken des Spannmittels 22 um einen Bolzen 15 bzw. die Schwenkachse 38 um den gewünschten Winkel 40. Das Spannmittel 22 ist je nach spezieller Ausgestaltung des Rahmens 24 nicht nur um bspw. 45°, sondern auch um 90° verschwenkbar. Hierfür ist eine Rasteinrichtung 16 gemäß Figur 4 vorgesehen, welche eine exakte Einstellung des gewünschten Winkels 40 zum Verschwenken des Spannmittels 22 ermöglicht.

Die Spanneinrichtungen 32, 34 werden mittels Spannzylindern 5 betätigt, indem die Spannbacken 3, 4 in Spannstellung gegen die Außenseite der Rahmenschenkel 6, 7 gefahren werden können, wodurch der Rahmen 24 eingespannt und zentriert wird.

Die Spannmittel 22 sind längs eines Balkens 8 längsverschieblich, bspw. mittels eines Zahnriemenantriebes angeordnet. Hierdurch kann der zu bearbeitende Rahmen 24 in die Bearbeitungsposition an der Bearbeitungsstation 26 gefahren werden. Die Spanneinrichtungen 32, 34 sind an einem abgekröpften Tragarm 9 gehalten, welcher mit dem Zahnriemenantrieb verbunden ist. Zur Führung der Spanneinrichtungen 32, 34 sind an dem Tragarm 9 Führungselemente 10 angeordnet, welche an dem Längsbalken 8 verfahrbar gelagert sind. Um die Spanneinrichtungen 32, 34 in und außer Eingriff mit dem Rahmen 24 zu bringen, was insbesondere für das Verschwenken bzw. Verfahren des Rahmens 24 erforderlich ist, sind die Spanneinrichtungen 32, 34 bzw. die Spannmittel 22 bzgl. des Rahmens 24 bzw. des Längsbalkens 8 in Richtung der Schwenkachse 38 auf- und abverfahrbar, was mittels einer Hubvorrichtung 11 bewerkstelligt wird.

Der Tragarm 9 weist an dem freien Ende eine Halteplatte 42 auf, an der die Spanneinrichtungen 32, 34 und deren Betätigungsmittel, insbesondere die Spannzylinder 5, angeordnet sind. Die Halteplatte 42 ist dabei um die Schwenkachse 38 verschwenkbar an dem Tragarm 9 gelagert. Die Halteplatte 42 ist bevorzugt als Winkelplatte o. dgl. ausgebildet und weist eine Aussparung 50 auf, an deren Seitenrändern die Spanneinrichtungen 32, 34 angeordnet sind.

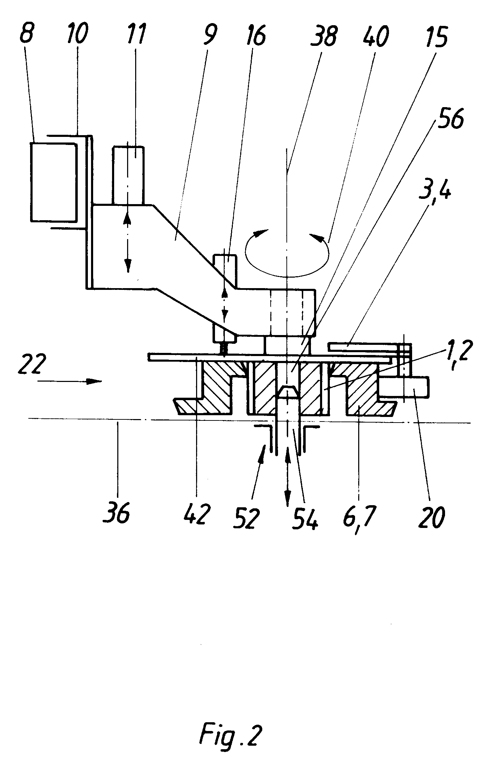

Um ein exaktes Positionierung der Halteplatte 42 in der jeweiligen Bearbeitungsposition an der Bearbeitungsstation 26 zu ermöglichen, ist eine Rasteinrichtung 52 vorgesehen. Die Rasteinrichtung 52 weist vorzugsweise wenigstens zwei in eine Bohrung 56 an der Halteplatte 42 eingreifende Rastbolzen 54 auf, wovon in Figur 2 nur der die Zentrierung bewirkende, in der Schwenkachse 38 liegende Rastbolzen 54 zu erkennen ist. Der zweite (nicht dargestellte) Bolzen greift in eine Bohrung an einem Schenkel der Platte 42 ein und dient zur Drehsicherung. Die ortsfest bzgl. der Bearbeitungsstation 26 angeordneten Rastbolzen 54 sind bspw. mittels Pneumatikzylinder in und außer Raststellung mit den Bohrungen 56 der Halteplatte 42 verschiebbar.

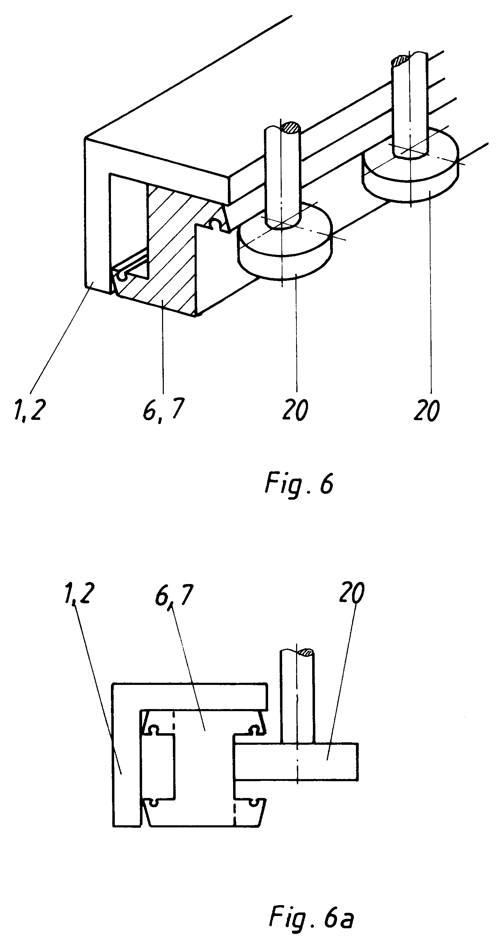

Wie insbesondere aus den Figuren 6, 6a ersichtlich ist, können anstelle der Spannbacken 3, 4 auch Rollen 20, insbesondere Andruckrollen vorgesehen sein, die zum einen den Vorteil aufweisen, daß optisch störende Impressionen an den Rahmenteilen aufgrund des Einspannens weitestgehend vermieden werden. Hierbei ist zu berücksichtigen, daß insbesondere größere Rahmen 24 ein Gewicht von bis zu 150 kg erreichen können, so daß erhebliche Anpreßkräfte erforderlich sind. Im Falle des Einsatzes von herkömmlichen Spannbacken kann es deshalb zu optisch störenden Impressionen an dem Rahmen 24 kommen, während dies bei dem Einsatz von Rollen 20, insbesondere Andruckrollen, praktisch vermieden wird.

Die Rollen 20 haben zusätzlich den Vorteil, daß bei einer nicht simultanen Spannbewegung der Spanneinrichtungen 32, 34 dennoch eine Zentrierung möglich ist. Bei einer nicht simultanen Spannbewegung tritt nämlich unter Umständen das Problem auf, daß eine Spannvorrichtung bereits ein Rahmenteil eingespannt hat, während die andere Spannvorrichtung noch nicht in Anlagestellung an das entsprechende Rahmenteil getreten ist. Dann kann es insbesondere bei Einsatz von Spannbacken vorkommen, daß sich der Rahmen 24 nicht in Zentrierstellung befindet und auch durch die zeitlich spätere betätigte Spanneinrichtung nicht in Zentrierstellung gebracht werden kann, da die zeitlich früher betätigte Spannvorrichtung bereits das Rahmenteil bzw. den Rahmen 24 fest eingespannt hat. Im Falle des Einsatzes von Rollen kann jedoch das erste, bereits mittels der zuerst betätigten Spanneinrichtung eingespannte Rahmenteil aufgrund der Wirkung des zeitlich später gespannten zweiten Rahmenteils in der ersten Spanneinrichtung verschoben und somit der gesamte Rahmen auch bei nicht simultaner Betätigung der beiden Spanneinrichtungen zentriert werden.

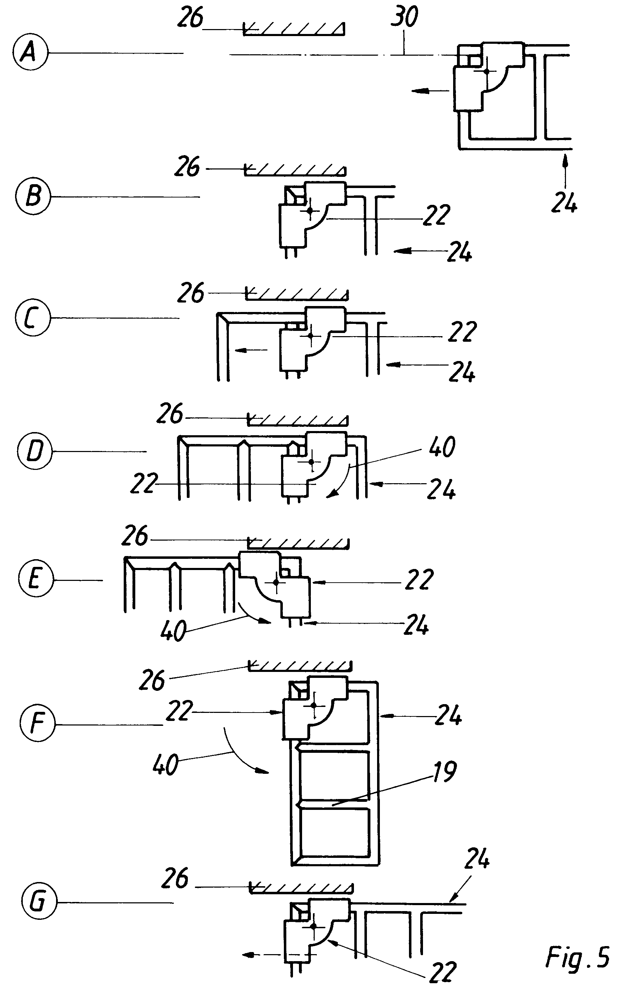

Das Verfahren zur Betätigung der erfindungsgemäßen Vorrichtung 28 ist in einzelnen Schritten a bis g in der Figur 5 dargestellt. In der Ausgangsstellung wird der Rahmen 24 von einer von den Montageverhältnissen bzw. Fertigungsverhältnissen abhängigen Position von der Vorrichtung 28 zu der Bearbeitungsstation 26 verfahren. Bspw. kann der Rahmen 24 von einer Schweißmaschine, in welcher Rahmenschenkel bzw. Profilstücke zu dem Rahmen zusammengeschweißt werden, zu einer Bearbeitungsstation 26 zum Abtragen von Schweißraupen bzw. Einbringen von Dichtungsnuten u. dgl. verfahren werden. Von dieser Ausgangsposition wird der Rahmen 24 mittels des Spannmittels 22 aufgenommen, indem die Spanneinrichtungen 32, 34 längs des Balkens 8 zu dem Rahmen 24 verfahren werden, wobei die Spanneinrichtungen 32, 34 anschließend mittels der Hubvorrichtung 11 abgesenkt und die Spannbacken 3, 4 mittels der Spannzylinder 5 gegen die feststehenden Anschläge 1, 2 verfahren werden, derart, daß der zu bearbeitende Rahmenabschnitt, insbesondere eine Rahmenecke, in der Aussparung 50 der Halteplatte 42 von allen Seiten frei zugänglich zu liegen kommt. Nach Betätigung der Spanneinrichtungen 32, 34 ist der Rahmen 24 nicht nur eingespannt, sondern bereits bzgl. des als erstes, zu bearbeitenden Rahmenteils, insbesondere der Rahmenaußen- bzw. Rahmeninnenecke zentriert.

Anschließend wird der Rahmen 24 an die Bearbeitungsstation 26 verfahren und das Spannmittel 22 mittels der Hubvorrichtung 11 auf eine Auflage 36 der Vorrichtung 28 gespannt. Dieser Verfahrensschritt ist in Figur 5b dargestellt.

Nach Bearbeitung der ersten Ecke des Rahmens 24 werden die Spanneinrichtungen 32, 34 wieder geöffnet und angehoben und bis zu dem ersten Kämpfer 19 verfahren. Nach Absenkung des Spannmittels 22 werden die Spanneinrichtungen 32, 34 wieder in Anlagestellung bzw. Spannstellung gebracht, der Rahmen 24 zur Bearbeitung der ersten Kämpferverbindung in die entsprechende Bearbeitungsposition an der Bearbeitungsstation 26 verfahren und wieder gegen die Auflage 36 gespannt. Sodann erfolgt die Bearbeitung der ersten Kämpferverbindung, wie dies in der Figur 5c dargestellt ist. Sofern weitere Kämpferverbindungen vorhanden sind, wiederholt sich dieser Arbeitsvorgang, wie dies bspw. in Figur 5d dargestellt ist. Zum Bearbeiten des in Transportrichtung letzten Rahmenecks werden die Spanneinrichtungen 32, 34 nach Öffnen und Anheben um 90° gemäß Figur 5e geschwenkt und das zweite Rahmeneck eingespannt und bearbeitet. Nach Bearbeitung aller Eckverbindungen an einem Rahmenschenkel wird der in den Spanneinrichtungen 32, 34 eingespannte Rahmen 24 durch eine Schwenkung des Spannmittels 22 um 90° verschwenkt, wodurch die Position gemäß Figur 5f erreicht wird. Nach einer entsprechenden Bearbeitung aller Eckverbindungen des zweiten Rahmenschenkels werden die Spanneinrichtungen 32, 34 analog den vorhergehenden Schritten geöffnet, angehoben und abgesenkt, wobei anschließend der Rahmen 24 erneut um 90° im Uhrzeigersinn verschwenkt wird, bis die Stellung gemäß Figur 5g erreicht ist. Anschließend findet eine Bearbeitung des dritten Rahmenschenkels in der Weise, wie ausgehend von Figur 5b beschrieben, statt. Der Bearbeitungsablauf wiederholt sich, bis alle Rahmenschenkel bzw. die an den Rahmenschenkeln befindlichen Eckverbindungen abgearbeitet sind.

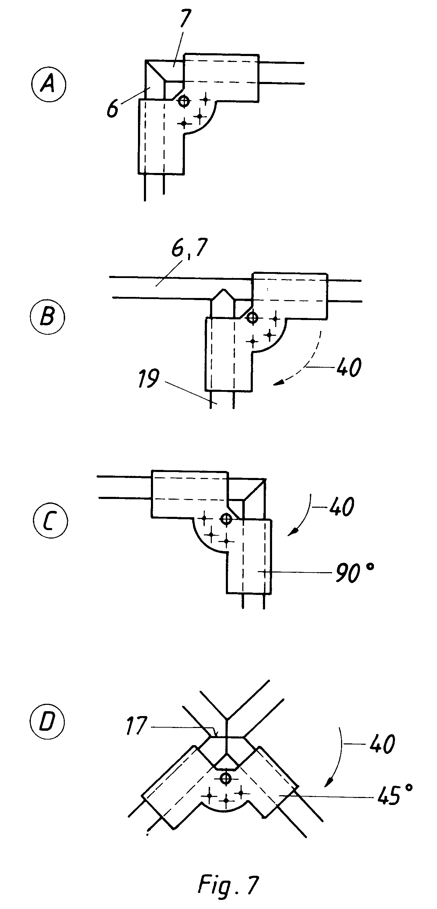

Wie aus Figur 7 ersichtlich, ist es mit der erfindungsgemäßen Vorrichtung ebenfalls möglich, sogenannte Rahmenkreuze 17 (Figur 7d) zu bearbeiten, wobei in diesem Fall das Spannmittel 22 nicht um 90°, sondern nur um 45° zu schwenken ist. Die Ausführungsbeispiele der Figur 7a, b und c beziehen sich auf die vorher bereits beschriebene Bearbeitung der ersten Ecke des Rahmens 24, einer Kämpferverbindung bzw. der zweiten Ecke des Rahmens 24.

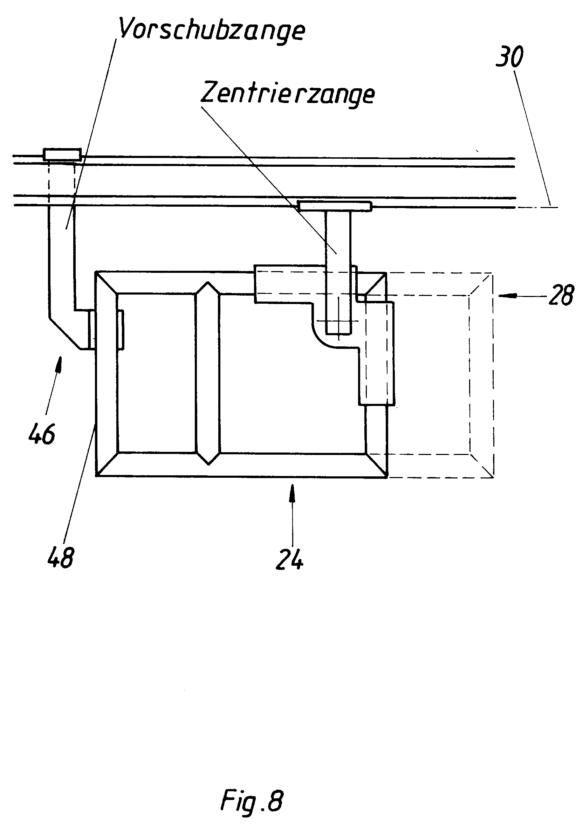

Um die Taktzeit zur Bearbeitung des Rahmens zu reduzieren, ist es nach einer weiteren Ausführungsform der Erfindung auch möglich, ein zweites Spannmittel 46 gemäß Figur 8 einzusetzen, welches eine weitere Spannvorrichtung 48 aufweist und mit einem separaten Zahnriementrieb an dem Längsbalken 8 verfahrbar ist. Hierdurch wird erreicht, daß nach der Bearbeitung eines Rahmenecks das erste Spannmittel 22 geöffnet und angehoben werden kann, während das zweite Spannmittel 46 in Eingriff bzw. Anlagestellung mit dem Rahmen 24 verbleibt und nach dem Öffnen und Anheben des ersten Spannmittels 22 den Rahmen 24 in die nächste Bearbeitungsposition bzgl. der Bearbeitungsstation 26 verschiebt.

### Bezugszeichenliste

- 1: - Anschlag
- 2: - Anschlag
- 3: - Spannbacke
- 4: - Spannbacke
- 5: - Spannzylinder
- 6: - Rahmenschenkel
- 7: - Rahmenschenkel
- 8: - Balken
- 9: - Tragarm
- 10: - Führungselement
- 11: - Hubvorrichtung
- 12: - Schwenkzylinder
- 13: - Kolbenstange
- 14: - Auge
- 15: - Bolzen
- 16: - Rasteinrichtung
- 17: - Rahmenkreuz
- 19: - Kämpfer
- 20: - Rolle
- 22: - Spannmittel
- 24: - Rahmen
- 26: - Bearbeitungsstation
- 28: - Vorrichtung
- 30: - Längsachse
- 32: - Spanneinrichtung
- 34: - Spanneinrichtung
- 36: - Auflage
- 38: - Schwenkachse
- 40: - Winkel
- 42: - Halteplatte
- 44: - Verschwenkmittel
- 46: - Spannmittel
- 48: - Spannvorrichtung
- 50: - Aussparung
- 52: - Rasteinrichtung
- 54: - Rastbolzen
- 56: - Bohrung

## Patentansprüche

1. Vorrichtung (28) zum Transportieren, Positionieren und/oder Verschwenken eines Werkstückes, insbesondere eines Fenster- oder Türrahmens (24) in wenigstens eine Bearbeitungsposition an einer Bearbeitungsstation (26), dadurch gekennzeichnet, daß ein in Richtung einer Längsachse (30) der Vorrichtung (28) verfahrbares Spannmittel (22) vorgesehen ist, zwei, insbesondere i. w. rechtwinklig zueinander ausgerichtete Spanneinrichtungen (32, 34) zum Einspannen von insbesondere i. w. rechtwinklig angeordneten Rahmenteilen des Rahmens (24), wie Rahmenschenkel (6, 7), Kämpfer (19), Rahmenkreuz (17) o. dgl., aufweist und um eine zur Transportrichtung senkrechte Achse (38) um einen Winkel (40) verschwenkbar ist.

2. Vorrichtung nach Anspruch 1, dadurch gekennzeichnet, daß das Spannmittel (22) in Richtung einer zu einer Auflage (36) der Vorrichtung (28) i. w. senkrechten Achse (38) auf- und abverfahrbar ist.

3. Vorrichtung nach Anspruch 1 oder 2, dadurch gekennzeichnet, daß das Spannmittel (22) um Winkel (40) von etwa 45° bis 180°, bevorzugt um, mittels einer Rasteinrichtung (16) einstellbare Winkelschritte von ca. 45° oder ein Vielfaches hiervon verschwenkbar ist.

4. Vorrichtung nach einem der vorhergehenden Ansprüche, dadurch gekennzeichnet, daß die Spanneinrichtung (32, 34) als Spannzange mit einem vorzugsweise feststehenden Anschlag (1, 2) und einem auf den Anschlag (1, 2) zu und von dem Anschlag (1, 2) weg verfahrbaren Spannteil, insbesondere Spannbacke (3, 4) ausgebildet ist.

5. Vorrichtung nach Anspruch 4, dadurch gekennzeichnet, daß die Spannteile (3, 4) und/oder die Anschläge (1, 2) in und außer Anlagestellung an das Werkstück verschwenkbar sind.

6. Vorrichtung nach Anspruch 4 oder 5, dadurch gekennzeichnet, daß das Spannteil ein oder mehrere Rollen (20), wie Andruckrollen o. dgl. aufweist.

7. Vorrichtung nach einem der vorhergehenden Ansprüche, dadurch gekennzeichnet, daß das Spannmittel (22) einen Tragarm aufweist (9), der einends über ein Führungselement (10) an einem in Förderrichtung (30) verlaufenden Balken o. dgl., bspw. mittels eines Zahnriemenantriebs verfahrbar gelagert ist.

8. Vorrichtung nach Anspruch 7, dadurch gekennzeichnet, daß der Tragarm (9) mittels einer Hubvorrichtung (11) bzgl. des Führungselements (10) in Richtung der Schwenkachse (38) auf- und abverfahrbar ist.

9. Vorrichtung nach einem der Ansprüche 7 oder 8, dadurch gekennzeichnet, daß der Tragarm (9) eine Halteplatte (42) aufweist, an der die Spanneinrichtungen (32, 34) und deren Betätigungsmittel, wie Schwenkzylinder (5) o. dgl., angeordnet sind, wobei die Halteplatte (42) verschwenkbar an dem Tragarm (9) gelagert ist.

10. Vorrichtung nach Anspruch 9, dadurch gekennzeichnet, daß die Verschwenkmittel (44) für die Halteplatte (42) als Schwenkzylinder (12) mit Kolbenstange (13) ausgebildet sind, die einends an der Halteplatte (42) und anderenends an dem Tragarm (9) angelenkt sind.

11. Vorrichtung nach einem der vorhergehenden Ansprüche, dadurch gekennzeichnet, daß entlang der Längsachse (30) der Vorrichtung (28) ein zweites Spannmittel (46) verfahrbar angeordnet ist, welches eine Spannvorrichtung (48) zum Einspannen eines Rahmenteils des Rahmens (24) aufweist.

12. Vorrichtung nach Anspruch 11, dadurch gekennzeichnet, daß zweite Spannmittel (46) insbesondere mittels eines zweiten Zahnriementriebes o. dgl. unabhängig von dem ersten Spannmittel (22) verfahrbar ist.

13. Vorrichtung nach einem der Ansprüche 9 bis 12, dadurch gekennzeichnet, daß das die Halteplatte (42) als Winkelplatte o. dgl. ausgebildet ist und eine Aussparung (50) aufweist, an deren Seitenrändern die Spanneinrichtungen (32, 34) angeordnet sind.

14. Vorrichtung nach einem der vorhergehenden Ansprüche, dadurch gekennzeichnet, daß das Spannmittel (22) bzw. deren Halteplatte (42) mittels einer Rasteinrichtung (52), bspw. wenigstens einem in eine Bohrung (56) an der Halteplatte (42) eingreifenden Rastbolzen (54), in der Bearbeitungsposition an der Bearbeitungsstation (26) positionierbar ist/sind.

15. Verfahren für eine Vorrichtung (28) nach einem der vorhergehenden Ansprüche, dadurch gekennzeichnet, daß man
a) die Spannmittel (22) hin zum Rahmen (24) verfährt und den Rahmen (24) einspannt,
b) den Rahmen (24) zur Bearbeitungsstation (26) verfährt und bearbeitet,
c) mit den Spannmitteln (22) ggf. den Rahmen (24) erneut einspannt, verfährt und bearbeitet,
d) die Spannmittel (22) um etwa 45° oder ein Vielfaches hiervon verschwenkt und den Rahmen (24) erneut einspannt, verfährt und bearbeitet,
e) den eingespannten Rahmen (24) mit dem Spannmittel (22) um etwa 45° oder ein Vielfaches hiervon verschwenkt und bearbeitet,
f) ggf. einen oder mehrere der Schritte b, c, d, e wiederholt und
g) den Rahmen (24) weg von der Bearbeitungsstation (26) verfährt und die Spannmittel (22) löst.

16. Verfahren nach Anspruch 15, dadurch gekennzeichnet, daß das man den Rahmen (24) mittels eines zweiten Spannmittels (46) verfährt, sofern die ersten Spannmittel (22) außer Eingriff mit dem Rahmen (24) stehen.
